# FASCICULE DE BREVET EUROPEEN

(11) **EP 2 459 444 B1**
(45) Date de publication et mention de la délivrance du brevet: **11.12.2013**
(21) Numéro de dépôt: 10762722.6
(22) Date de dépôt: 29.07.2010
(51) Int. Cl.: B64D 27/18, B64D 27/26

(54) **ASSEMBLAGE POUR AERONEF COMPRENANT UN MAT D'ACCROCHAGE DE TURBOMACHINE DONT LES MOYENS D'ATTACHE SUR LA VOILURE SONT AGENCES EN T**
BAUGRUPPE FÜR EIN FLUGZEUG MIT EINER TURBOMASCHINENANBRINGUNGSSTREBE MIT IN T-FORM ANGEORDNETEN ELEMENTEN ZUR ANBRINGUNG AM FLÜGEL
ASSEMBLY FOR AN AIRCRAFT COMPRISING A TURBOMACHINE ATTACHMENT STRUT OF WHICH THE MEANS FOR ATTACHMENT TO THE WING ARE ARRANGED IN A T SHAPE

(30) Priorité: 31.07.2009 FR 0955423
(43) Date de publication de la demande: 06.06.2012
(73) Titulaire: Airbus Operations, 31060 Toulouse (FR)
(72) Inventeur: LAFONT, Laurent, F-31320 Pechbusque (FR)
(74) Mandataire: Ilgart, Jean-Christophe
(86) Numéro de dépôt international: PCT/FR2010/051616
(87) Numéro de publication internationale: WO 2011/012821

(56) Documents cités:
- WO-A1-2009/066103
- FR-A1- 2 887 522

## Description

La présente invention se rapporte de façon générale au domaine des assemblages pour aéronef comprenant un élément de voilure, une turbomachine de préférence du type turboréacteur à double flux, et un mât d'accrochage de la turbomachine sur l'élément de voilure, de préférence prévu pour suspendre la turbomachine sous la voilure.

Un exemple de l'art antérieur est fourni par le document WO 2009/066103 A1.

L'invention se rapporte plus précisément à la conception du mât d'accrochage d'un tel assemblage, et a pour but de réduire son encombrement afin de limiter les pertes aérodynamiques qu'il est susceptible de provoquer.

A cette fin, l'invention a tout d'abord pour objet un assemblage pour aéronef comprenant un élément de voilure, une turbomachine et un mât d'accrochage de la turbomachine sur l'élément de voilure, le mât d'accrochage comprenant une structure primaire de passage d'efforts ainsi que des moyens d'attache de ladite structure primaire sur l'élément de voilure, formant un système isostatique.

Selon l'invention, lesdits moyens d'attache sont composés des éléments suivants :
- une première attache ou un premier groupe d'attaches logé dans un bord d'attaque de l'élément de voilure, et conçu pour assurer uniquement la reprise des efforts s'exerçant selon une direction transversale de la turbomachine et selon une direction longitudinale de celle-ci ;
- une seconde attache logée dans le bord d'attaque de l'élément de voilure, décalée selon la direction transversale de la première attache ou du premier groupe d'attaches, et conçu pour assurer uniquement la reprise des efforts s'exerçant selon la direction longitudinale de la turbomachine ;
- une troisième attache ou un troisième groupe d'attaches décalé selon une direction verticale de la première attache ou du premier groupe d'attaches et de la seconde attache, et conçu pour assurer uniquement la reprise des efforts s'exerçant selon la direction transversale de la turbomachine et selon la direction verticale de celle-ci ; et
- une quatrième attache comprenant une bielle s'étendant vers l'arrière, dont une première extrémité est raccordée sur la structure primaire et dont une seconde extrémité est raccordée sur l'élément de voilure, ladite première extrémité de bielle étant décalée selon la direction verticale de la première attache ou du premier groupe d'attaches.

Avec la conception des moyens d'attache isostatiques selon l'invention, la reprise du moment s'exerçant selon la direction transversale s'effectue de manière très satisfaisante d'une part à l'aide de la première attache ou du premier groupe d'attaches et de la seconde attache reprenant chacun des efforts s'exerçant selon la direction longitudinale, et d'autre part à l'aide de la quatrième attache incorporant la bielle décalée verticalement par rapport aux attaches précitées, et reprenant des efforts s'exerçant selon la direction de la bielle, qui présente au moins une composante selon la direction longitudinale du fait qu'elle s'étend vers l'arrière.

Le décalage des attaches impliquées s'effectue donc dans la direction verticale, contrairement aux réalisations de l'art antérieur dans lesquelles la reprise du moment s'exerçant selon la direction transversale était habituellement assurée par deux attaches espacées transversalement sur la structure primaire, chacune conçue pour reprendre des efforts s'exerçant selon la direction verticale.

Il en résulte une diminution de l'encombrement transversal de la structure primaire du mât portant les moyens d'attache, et donc une réduction des pertes aérodynamiques liées à la présence du mât au sein de l'assemblage. A cet égard, il est noté que dans le cas préféré d'une turbomachine à double flux, la structure primaire du mât est généralement amenée à traverser au moins une partie du canal annulaire secondaire. En présentant une dimension transversale réduite au sein de ce canal, la structure primaire ne procure que de faibles perturbations du flux secondaire, de sorte que les performances globales de l'aéronef demeurent satisfaisantes.

En outre, le décalage selon la direction transversale entre la première attache ou le premier groupe d'attaches et la seconde attache peut être très important, étant donné que ces deux attaches sont logées dans le bord d'attaque de l'élément de voilure, et qu'elles disposent donc de toute l'envergure pour pouvoir être espacées sans que cela ne génère de perturbations aérodynamiques additionnelles. En d'autres termes, ces deux attaches peuvent être écartées l'une de l'autre autant que nécessaire selon l'envergure du bord d'attaque, ce qui permet l'obtention d'un bras de levier important dans la reprise du moment s'exerçant selon la direction verticale, à l'aide de ces deux attaches reprenant chacune des efforts s'exerçant selon la direction longitudinale. L'augmentation du bras de levier assure une diminution des efforts à reprendre au niveau de chaque attache, et permet donc une réduction du dimensionnement de ces attaches, avec un gain en termes de coûts et de masse globale de l'assemblage.

De préférence, ladite troisième attache ou le troisième groupe d'attaches est agencé en dessous de la première attache ou du premier groupe d'attaches, et la première extrémité de la bielle raccordée sur la structure primaire est agencée en dessous de la troisième attache ou du troisième groupe d'attaches. Cela permet d'éloigner fortement la bielle de la première attache ou du premier groupe d'attaches, pour une meilleure reprise du moment s'exerçant selon la direction transversale, habituellement le plus conséquent en raison du fait qu'il résulte directement des efforts longitudinaux de poussée créés par la turbomachine en fonctionnement. Néanmoins, la troisième attache pourrait ne pas être située entre la première attache et la première extrémité de la bielle, par exemple en dessous de cette première extrémité de bielle, sans sortir du cadre de l'invention.

De préférence, lesdits moyens d'attache sont agencés en T en vue selon la direction longitudinale, la première attache ou le premier groupe d'attaches et la seconde attache étant respectivement raccordées aux extrémités de la tête du T logée dans le bord d'attaque de l'élément de voilure, et la troisième attache ou le troisième groupe d'attaches et la bielle étant raccordées sur la base du T.

Cette disposition particulière en T, dans laquelle seulement toute ou partie de la base du T est dédiée à pénétrer dans le canal annulaire secondaire d'une turbomachine à double flux, ne procure que de faibles perturbations aérodynamiques sur le flux secondaire.

Pour diminuer encore davantage ces perturbations, il est de préférence fait en sorte qu'en vue de devant selon la direction longitudinale, la troisième attache ou le troisième groupe d'attaches et la quatrième attache soient masqués par la structure primaire du mât d'accrochage. De ce fait, il n'est pas nécessaire d'implanter de carénage aérodynamique additionnel pour masquer ces attaches.

Préférentiellement, la première attache ou le premier groupe d'attaches est constitué par une attache unique, et/ou la troisième attache ou le troisième groupe d'attaches est constitué par une attache unique, même si des conceptions à deux attaches distinctes pourraient être envisagées, sans sortir du cadre de l'invention.

De préférence, la première attache ou le premier groupe d'attaches et la seconde attache sont rapportés sur une extrémité supérieure d'un longeron avant de l'élément de voilure, cheminant selon une direction d'envergure de celui-ci.

De préférence, la turbomachine est à double flux et comprend un carter de soufflante ainsi qu'un carter intermédiaire agencé en aval du carter de soufflante et comportant un moyeu portant des bras structuraux,
ladite turbomachine comprend une première enveloppe structurale s'étendant vers l'aval à partir dudit moyeu du carter intermédiaire, cette enveloppe participant à la délimitation radiale interne d'un passage pour un flux secondaire de la turbomachine,
et ladite structure primaire du mât d'accrochage comprend une seconde enveloppe structurale, montée sur ladite première enveloppe structurale et agencée dans la continuité aval de celle-ci afin de participer également à la délimitation radiale interne du passage pour le flux secondaire, ladite structure primaire du mât d'accrochage comprenant en outre une structure de déport agencée dans le passage pour le flux secondaire, reliant ladite seconde enveloppe structurale audit élément de voilure et portant au moins une partie desdits moyens d'attache du mât d'accrochage, et de préférence la totalité de ceux-ci.

Une telle structure primaire de mât d'accrochage intègre une enveloppe structurale située au plus prêt de l'axe moteur. Son encombrement ainsi que sa masse globale s'en trouvent avantageusement diminués. En outre, avec la fixation entre les deux enveloppes structurales s'étendant chacune tout autour de l'axe moteur, la reprise du moment s'exerçant selon la direction transversale de la turbomachine peut être assurée de manière extrêmement satisfaisante, réduisant ainsi fortement la flexion de la turbomachine selon cette direction.

En outre, dans le cas où la turbomachine est destinée à être montée sous l'élément de voilure de l'aéronef, un autre avantage réside dans le fait de pouvoir installer le mât sur l'aile sans qu'il n'atteigne la ligne de crête définie par cette dernière, et en conservant une garde au sol suffisante sous la turbomachine, toujours en raison de l'implantation de la seconde enveloppe structurale au plus prêt de l'axe moteur.

L'invention a également pour objet un aéronef comprenant au moins un assemblage tel que décrit ci-dessus, avec l'élément de voilure étant préférentiellement constitué par une aile principale de l'aéronef.

D'autres avantages et caractéristiques de l'invention apparaîtront dans la description détaillée non limitative ci-dessous.

Cette description sera faite au regard des dessins annexés parmi lesquels ;
- la figure 1 représente une vue en demi-coupe longitudinale d'un assemblage pour aéronef selon un mode de réalisation préféré de la présente invention, dont l'ensemble moteur est suspendu sous une aile d'aéronef ;
- les figures 2a et 2b montrent deux vues en perspective de la structure primaire de passage d'efforts du mât d'accrochage appartenant à l'ensemble moteur de l'assemblage montré sur la figure 1, prises selon deux angles de vue distincts ;
- les figures 3a et 3b montrent deux vues en perspective de la première enveloppe structurale équipant la turbomachine appartenant à l'ensemble moteur de l'assemblage montré sur la figure 1, prises selon deux angles de vue distincts ;
- les figures 4 et 5 représentent des vues schématiques en coupe prises le long des lignes IV-IV et V-V de la figure 1, respectivement ;
- les figures 6 et 7 représentent des vues respectivement similaires à celles des figures 2b et 2a, montrant les moyens d'attache équipant le mât d'accrochage ;
- la figure 8 représente une vue schématique de face de la structure primaire du mât d'accrochage montré sur les figures précédentes ;
- la figure 9 représente une vue en demi-coupe longitudinale d'un assemblage pour aéronef selon un autre mode de réalisation préféré de la présente invention, toujours avec son ensemble moteur suspendu sous l'aile de l'aéronef ; et
- la figure 10 représente une vue schématique de derrière de la structure primaire du mât d'accrochage appartenant à l'ensemble moteur montré sur la figure 9.

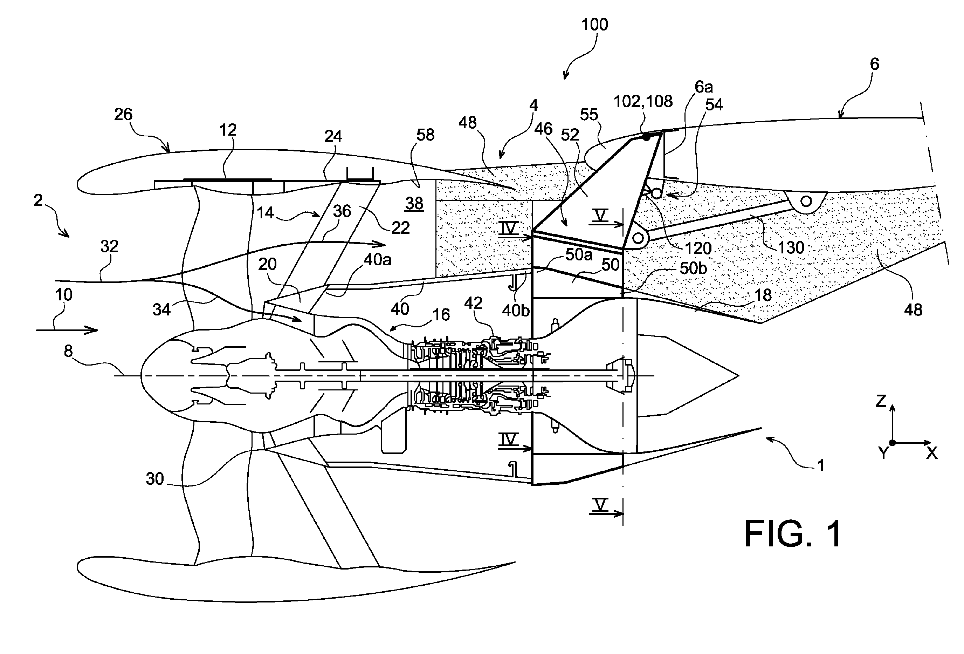

En référence à la figure 1, on peut apercevoir un assemblage 100 pour aéronef, selon un mode de réalisation préféré de la présente invention ensemble moteur 1. L'assemblage comprend un élément de voilure 6, ici une aile principale de l'aéronef, ainsi qu'un ensemble moteur 1 suspendu sous l'aile 6.

L'ensemble 1 comprend globalement une turbomachine, ici préférentiellement un turboréacteur 2 à double flux, et un mât d'accrochage 4 permettant d'assurer la suspension du turboréacteur sous l'aile principale 6 de l'aéronef.

Dans toute la description qui va suivre, par convention, on appelle X la direction longitudinale du turboréacteur, qui est parallèle à un axe longitudinal 8 de ce dernier, et également dénommé axe moteur. D'autre part, on appelle Y la direction orientée transversalement par rapport au turboréacteur, et Z la direction verticale ou de la hauteur, ces trois directions X, Y et Z étant orthogonales entre-elles.

D'autre part, les termes « amont » et « aval » sont à considérer par rapport à une direction principale d'écoulement des gaz au sein du turboréacteur, cette direction étant représentée schématiquement par la flèche 10.

Sur la figure 1, on peut apercevoir que le turboréacteur 2 comporte une pluralité de carters rapportés fixement les uns aux autres, à savoir, successivement de l'amont vers l'aval, un carter de soufflante 12, un carter intermédiaire 14, un carter central également dénommé carter de générateur de gaz 16, puis un carter d'éjection des gaz 18. Pour ce qui concerne le carter intermédiaire, celui-ci présente un moyeu 20 centré sur l'axe 8, à partir duquel s'étendent radialement des bras 22 portant une virole extérieure 24 de ce carter 14. La virole 24 se situe dans la continuité aval du carter de soufflante 12 auquel elle est rapportée, et une nacelle 26 du turboréacteur vient entourer ces deux éléments 12, 24.

Le moyeu 20 se trouve en aval d'un bec de séparation des flux 30, servant à dissocier le flux 32 entrant dans la soufflante en un flux primaire 34 traversant le générateur des gaz, et un flux secondaire 36 destiné à emprunter un passage annulaire 38 prévu à cet effet, également dénommé canal annulaire secondaire.

Outre les différents carters mentionnés ci-dessus, dont certains peuvent être réalisés ensemble d'une seule pièce, le turboréacteur comprend une première enveloppe structurale 40 s'étendant vers l'aval à partir du moyeu 20, sensiblement selon la direction X en étant centrée sur l'axe 8. Son extrémité aval 40b se trouve de préférence agencée juste en aval de la chambre de combustion 42 du turboréacteur, dans un plan transversal. Son extrémité amont 40a, également annulaire, est rapportée de façon boulonnée sur le moyeu, avec une pluralité de boulons (non représentés) répartis circonférentiellement. Le nombre important de boulons espacés les uns des autres sur l'extrémité amont 40a permet d'éviter au mieux les effets néfastes d'ovalisation de l'enveloppe 40, durant le fonctionnement du turboréacteur.

Pour ce qui concerne le mât d'accrochage 4, celui-ci dispose d'une structure primaire de passage d'efforts 46, également dénommée structure rigide, ainsi que des structures secondaires 48 servant essentiellement au logement des équipements ainsi qu'à former des structures aérodynamiques faisant la jonction entre l'aile 6 et le turboréacteur 2. Ici, on peut voir que la structure primaire 46 comprend une seconde enveloppe structurale 50, également centrée sur l'axe 8 et montée fixement sur l'extrémité aval 40b de la première enveloppe 40. Ainsi, comme mentionné ci-dessus, la jonction entre les première et seconde enveloppes 40, 50 se trouve en aval de la chambre de combustion 42, et de préférence dans un plan transversal situé juste en sortie de celle-ci, comme cela a été représenté. En outre, la structure primaire 46 comporte une structure de déport 52 s'étendant selon la direction Z à partir de l'enveloppe 50, et également dans la direction X vers l'arrière comme cela a été schématisé sur la figure 1. On peut en effet voir que cette structure 52 est équipée en partie arrière de moyens d'attache 54 qui seront détaillés ultérieurement, et qui permettent le montage de la structure primaire 46 sur la partie structurale de l'aile 6, et en particulier sur son longeron avant 6a délimitant vers l'arrière le bord d'attaque 55 de l'aile, et cheminant le long de l'envergure de celle-ci.

Dans cet ensemble moteur 1, le passage 38 du flux secondaire 36 est délimité dans la direction radiale externe par une surface interne 58 de la nacelle 26. En outre, la délimitation radiale interne de ce passage 38 est assurée tout d'abord par le moyeu 20 du carter intermédiaire 14, puis par la surface extérieure de l'enveloppe structurale 40 renfermant une partie du carter de générateur de gaz 16, et enfin par la surface extérieure de l'enveloppe structurale 50 située dans la continuité de la première enveloppe 40. Ainsi, la structure de déport 52 s'étend verticalement à travers le passage 38 du flux secondaire, de même que les structures secondaires 48 du mât d'accrochage 4.

Comme visible sur la figure 1, l'extrémité aval 50b de l'enveloppe structurale 50 se trouve à proximité d'une jonction entre le carter de générateur des gaz 16 et le carter d'éjection 18. Par conséquent, la seconde enveloppe structurale 50 du mât d'accrochage ne s'étend que sur une portion axiale relativement limitée, entre la chambre de combustion et le carter d'éjection des gaz 18. Pour des raisons de montage de la turbomachine sur l'enveloppe 50, la surface intérieure de celle-ci présente un diamètre supérieur au diamètre le plus grand de la portion de la turbomachine 1 se trouvant au niveau de la jonction entre le carter de générateur des gaz 16 et le carter d'éjection 18.

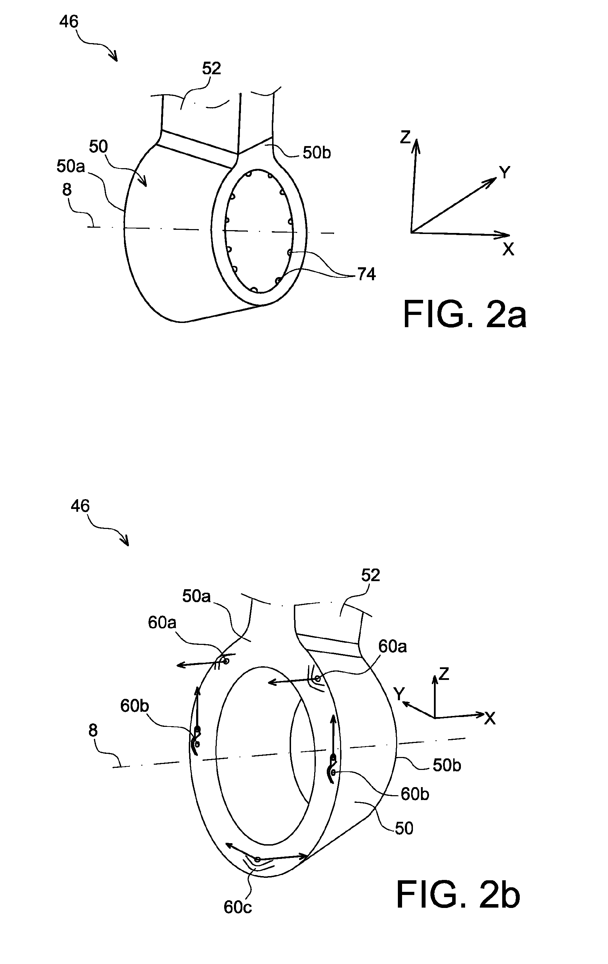

En référence à présent aux figures 2a et 2b, on peut apercevoir la structure primaire 46 du mât d'accrochage. Celle-ci peut être réalisée d'une seule pièce, ou bien à l'aide d'éléments rapportés fixement les uns sur les autres. Quoi qu'il en soit, l'enveloppe structurale 50 forme bien une structure sensiblement annulaire et continue tout autour de l'axe moteur 8, à travers laquelle l'extrémité aval du carter de générateur des gaz 16 est destinée à pénétrer.

Sur l'extrémité avant 50a de cette enveloppe, il est prévu des moyens d'accrochage destinés à coopérer avec des moyens d'accrochage complémentaires de l'extrémité aval de la première enveloppe structurale. Ces moyens d'accrochage comprennent par exemple deux attaches supérieures 60a disposées de part et d'autre d'un plan vertical médian (non représenté), chacune destinée à reprendre des efforts s'exerçant selon la direction X uniquement. Ils peuvent également comprendre deux attaches intermédiaires 60b, disposées de part et d'autre du plan vertical médian précité, et également traversé par un plan diamétral de cette enveloppe. Chacune d'elle est ici destinée à reprendre uniquement des efforts s'exerçant selon la direction Z. Enfin, ces moyens comprennent une attache inférieure 60c traversée par le plan vertical médian, et destinée à reprendre les efforts s'exerçant selon la direction X et selon la direction Y, mais pas selon la direction Z. Cela permet d'obtenir des moyens de montage, sur la première enveloppe structurale, qui forment un système de montage isostatique.

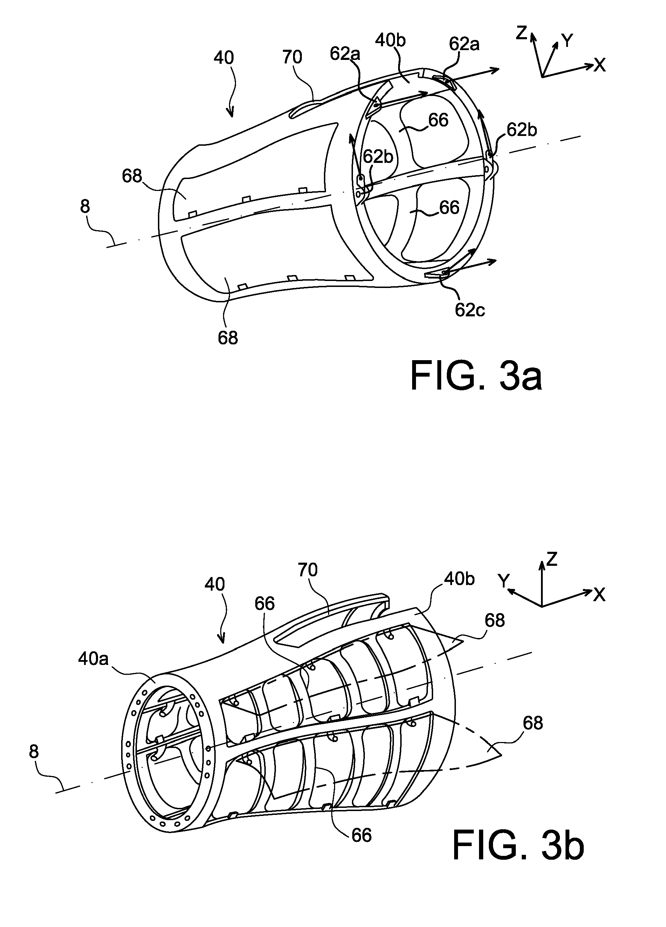

En référence à présent aux figures 3a et 3b, on peut voir la première enveloppe structurale 40, de préférence également réalisée d'un seul tenant, ou bien encore obtenue à partir de la fixation entre elles d'une pluralité d'éléments. Sur l'extrémité aval 40b de cette enveloppe, on peut voir les attaches complémentaires 62a, 62b et 62c destinées à être montées sur les attaches 60a, 60b, 60c leur étant situées en regard, respectivement.

En outre, on peut apercevoir que la structure 40 est trouée par des portes d'accès 66 destinées à permettre l'accès au carter de générateur des gaz du turboréacteur, ces portes 66 étant fermées par des volets mobiles 68 articulés sur cette même structure 40. Ainsi, en position fermée telle que montrée sur la figure 3a, les volets situés extérieurement recouvrent les portes 66 et participent donc à la délimitation radiale interne du flux secondaire du turboréacteur. En revanche, lorsque des opérations de manutention doivent être réalisées sur le moteur, les volets peuvent être pivotés de la manière schématique montrée sur la figure 3b, afin de libérer les portes 66, et donc permettre l'accès à l'espace intérieur délimité par cette structure 40.

Enfin, comme cela a été schématisé sur les figures 3a et 3b, l'enveloppe 40 peut présenter une fente 70 ouverte vers le haut et vers l'arrière afin de permettre le passage des structures secondaires 48 du mât d'accrochage.

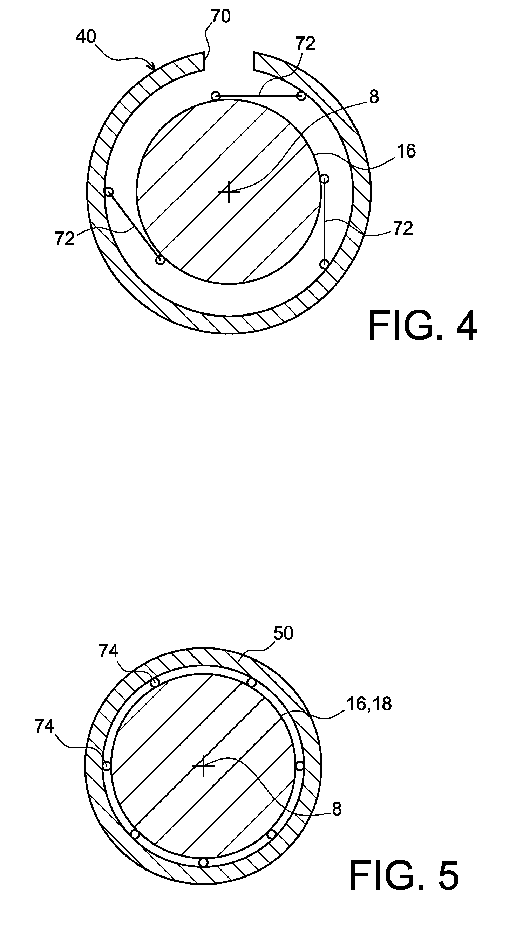

Bien que cela n'ait pas été représenté sur la figure 1, il est prévu que la première enveloppe structurale 40 soit reliée au carter de générateur de gaz 16 à l'aide d'une pluralité de bielles 72 réparties circonférentiellement de manière régulière, par exemple au nombre de trois comme montré sur la figure 4. De façon générale, cette disposition où les bielles sont articulées à chacune de leurs extrémités permet de faire face au phénomène de dilatation thermique différentiel entre le carter 16 et la structure 40. Cette jonction par les bielles 72 peut alternativement être réalisée sur l'extrémité amont 50a de la seconde enveloppe structurale 50.

Alternativement ou simultanément, l'extrémité aval 50b de l'enveloppe structurale 50 peut être reliée au carter d'éjection des gaz 18 ou au carter de générateur des gaz 16, ou encore à la jonction entre ceux-ci, par l'intermédiaire de systèmes 74 répartis circonférentiellement de manière régulière autour de l'axe 8. Ces systèmes 74, montrés sur la figure 5, comprennent des ressorts précontraints permettant d'absorber les mouvements relatifs entre ces deux éléments 50, 18 entre lesquels ils sont agencés.

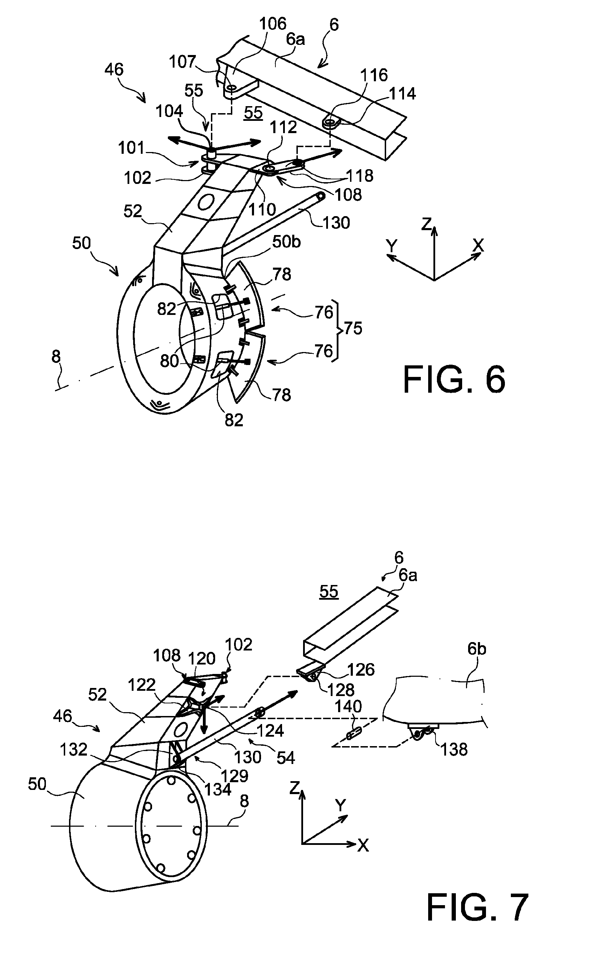

En référence à présent à la figure 6, on peut tout d'abord apercevoir une alternative de réalisation pour la structure primaire 46 du mât d'accrochage. Celle-ci présente effectivement la particularité d'intégrer un système d'inversion de poussée, ici basé sur une conception dite à volet mobile articulé. D'autres conceptions de systèmes d'inversion de poussée peuvent néanmoins être envisagées, sans sortir du cadre de l'invention.

Ainsi, le système d'inversion de poussée 75 comprend une pluralité d'ensembles 76 intégrant chacun un volet 78 dont l'extrémité arrière est articulée sur l'enveloppe 50. En fonctionnement normal du turboréacteur, les volets 78 sont destinés à être plaqués contre la surface extérieure de l'enveloppe structurale 50, de manière à former avec celle-ci la délimitation radiale interne du passage pour le flux secondaire. Dans cette position (non représentée), les volets 78, qui sont articulés au niveau de l'extrémité aval 50b de l'enveloppe 50, présentent une extrémité avant qui recouvre de préférence la jonction entre les deux enveloppes structurales 40, 50.

Pour assurer le déploiement du volet 78, chaque ensemble 76 comprend des moyens d'actionnement du type vérin 80 traversant une ouverture 82 qui est recouverte par le volet 78 en position rabattue. Ainsi, lorsque le vérin 80 se déploie suite à une commande d'activation du système d'inversion de poussée, le volet 78 pivote autour de son axe de rotation et vient progressivement se déployer dans le passage du flux secondaire. Naturellement, le déploiement de tous les volets 78, répartis circonférentiellement autour de l'axe 8, s'opère de manière simultanée.

Une fois les volets 78 déployés, le flux secondaire 36 circulant à travers le passage 38 impacte cette barrière radiale formée par l'ensemble des volets 78 déployés, et se retrouve donc renvoyé à contre courant radialement vers l'extérieur.

Sur cette figure 6, il est également représenté une partie des moyens d'attache 54 servant à l'accrochage de la structure primaire 46 sur l'aile 6.

Ces moyens, qui forment avantageusement un système isostatique, comprennent tout d'abord une première attache 101 interposée entre une extrémité supérieure du longeron avant 6a de l'aile, et une extrémité supérieure de la structure de déport 52. Cette attache 101 est prévue pour être logée au sein du bord d'attaque 55, tout comme l'extrémité supérieure de la structure de déport 52. Par conséquent, elle ne fait pas saillie dans le canal annulaire secondaire, et ne provoque donc aucune perturbation du flux secondaire. Elle est conçue pour assurer uniquement la reprise des efforts selon les directions X et Y, mais ceux s'exerçant selon la direction Z.

A titre d'exemple indicatif, une telle reprise d'efforts peut être obtenue en prévoyant une chape 102 solidaire de l'extrémité supérieure de la structure de déport 52, se projetant selon la direction Y en étant traversée par un axe 104 orienté selon la direction Z. Une autre ferrure 106 solidaire du longeron avant 6a est également prévue, et présente un orifice 107 pratiqué verticalement, traversé par l'axe 104. La ferrure 106 peut être agencée entre les deux têtes de la chape, ou bien extérieurement par rapport à celle-ci, un déplacement relatif selon la direction Z entre la chape 102 et la ferrure 106 restant possible dans les deux cas.

Les moyens 54 comprennent également une seconde attache 108 également interposée entre l'extrémité supérieure du longeron avant 6a de l'aile, et l'extrémité supérieure de la structure de déport 52. Cette attache 108 est aussi prévue pour être logée au sein du bord d'attaque 55. De préférence, elle est agencée de manière à ce que les première et seconde attaches 101, 108 se situent de part et d'autre d'un plan vertical médian de la structure primaire passant par l'axe 8, ce plan correspondant au plan vertical médian de l'ensemble moteur. De plus, ces deux attaches sont préférentiellement agencées à un même niveau dans la direction verticale. Par conséquent, elle ne fait pas non plus saillie dans le canal annulaire secondaire. Elle est conçue pour assurer uniquement la reprise des efforts selon la direction X, mais ceux s'exerçant selon les directions Y et Z.

A titre d'exemple indicatif, une telle reprise d'efforts peut être obtenue en prévoyant une ferrure 110 solidaire de l'extrémité supérieure de la structure de déport 52, se projetant selon la direction Y de façon opposée à la chape 102, en étant traversée par un axe 112 orienté selon la direction Z. Une ferrure 114 solidaire du longeron avant 6a est également prévue, et traversée par un axe 116 orienté selon la direction Z. Une ou deux biellettes 118 s'étendent selon la direction X et sont articulées à leurs extrémités sur les axes 112 et 116, de manière à créer la liaison mécanique entre les deux ferrures 110, 114.

En référence à la figure 7, on peut apercevoir les autres éléments constitutifs des moyens d'attache 54.

Il s'agit notamment d'une troisième attache 120 interposée entre une extrémité inférieure du longeron avant 6a de l'aile, et une portion arrière médiane de la structure de déport 52. Cette attache 120 est donc prévue sous l'aile 6, dans le canal annulaire secondaire, et conçue pour assurer uniquement la reprise des efforts selon les directions Z et Y, mais pas ceux s'exerçant selon la direction X.

A titre d'exemple indicatif, une telle reprise d'efforts peut être obtenue en prévoyant une ferrure 122 solidaire de la face arrière de la structure de déport 52, se projetant selon la direction X et portant un axe ou pion 124 en saillie vers l'arrière selon la direction X. Une autre ferrure 126 solidaire d'une extrémité inférieure du longeron avant 6a est également prévue, et présente un orifice 128 pratiqué longitudinalement, traversé par l'axe 124. Ici, un déplacement relatif selon la direction X entre la ferrure 122 et la ferrure 126 reste possible.

La troisième attache 120 se situe donc sous les première et seconde attaches 102, 108, en étant de préférence traversée par le plan vertical médian précité de part et d'autre duquel sont agencées ces attaches 102, 108.

Enfin, les moyens d'attache 54 comprennent une quatrième attache 129 comprenant une bielle 130 s'étendant vers l'arrière, agencée dans ce même plan vertical médian passant par l'axe 8, en étant inclinée selon les directions X et Z, par exemple d'une valeur proche de 45° par rapport à ces deux directions.

Une première extrémité de cette bielle est raccordée de façon articulée sur la structure de déport 52, à l'aide d'une chape 132 traversée par un axe d'articulation transversal 134, la chape étant rapportée sur la face arrière de la structure 52, sous la troisième attache 120, à proximité de la jonction entre la structure 52 et l'enveloppe 50. De manière analogue, l'extrémité opposée de la bielle est raccordée de façon articulée sur l'aile 6, à l'aide d'une chape 138 traversée par un axe d'articulation transversal 140, la chape étant rapportée sous l'intrados de l'aile 6, sur une partie structurale 6b de celle-ci située en aval du longeron 6a.

A l'aide cette conception, la bielle 130 est seulement capable de reprendre un effort s'exerçant selon sa propre direction, à savoir un effort comprenant une composante selon la direction Z et une composante selon la direction X.

Avec la conception décrite ci-dessus, les moyens d'attache isostatiques peuvent assurer la reprise des efforts selon la direction X à l'aide des première et seconde attaches 102, 108, ainsi qu'à l'aide de la bielle 130. En outre, ils assurent la reprise des efforts selon la direction Y à l'aide des première et troisième attaches 102, 120, tandis qu'ils assurent la reprise des efforts selon la direction Z à l'aide de la troisième attaches 120 et de la bielle 130.

En outre, la reprise du moment s'exerçant selon la direction X s'effectue à l'aide des première et troisième attaches 102, 120, par reprise des efforts selon la direction Y et du fait de leur décalage selon la direction Z. La reprise du moment s'exerçant selon la direction Y s'effectue à l'aide de la première attache 102 et de la bielle, par reprise des efforts selon la direction X et selon la direction de la bielle, respectivement, et du fait de leur décalage selon la direction Z. Enfin, la reprise du moment s'exerçant selon la direction Z s'effectue à l'aide des première et seconde attaches 102, 108, par reprise des efforts selon la direction X, et du fait de leur décalage selon la direction Y, au sein de l'envergure du bord d'attaque 55.

Les moyens d'attache 54 sont exclusivement constitués par les éléments décrits ci-dessus, c'est-à-dire qu'aucun autre élément de l'assemblage 100 ne participe à l'accrochage du mât sur l'aile.

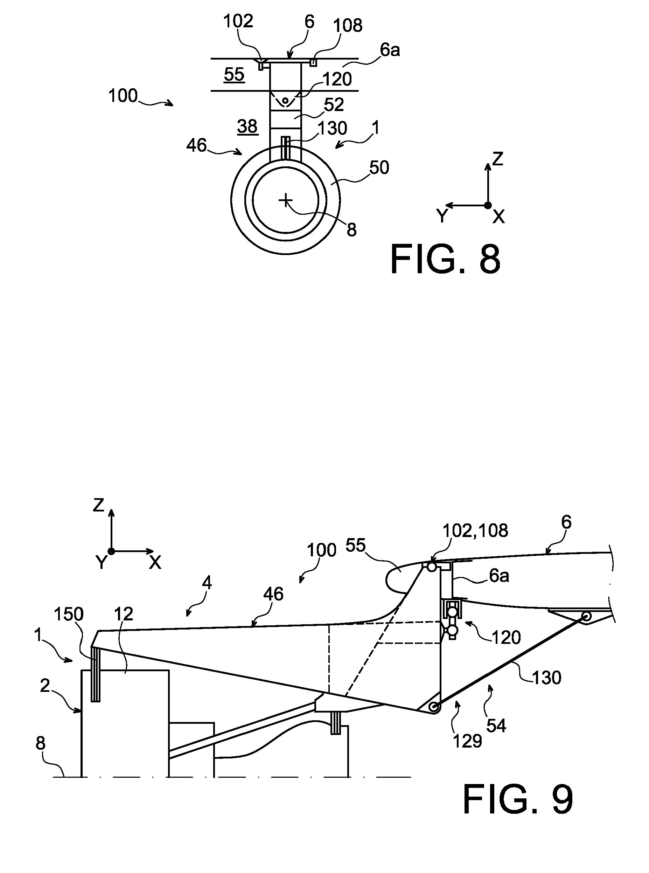

Comme le montre la figure 8, les moyens 54 sont agencés en T en vue selon la direction X, la première attache 102 et la seconde attache 108 étant respectivement raccordées aux extrémités de la tête du T logée dans le bord d'attaque 55, et la troisième attache 120 ainsi que la bielle 130 étant raccordées sur la base du T, s'inscrivant dans le plan vertical médian précité et pouvant être assimilée à la structure de déport 52. De plus, dans cette vue, on peut s'apercevoir que les attaches 102, 108, 120 et 129 sont masquées par la structure de déport 52, de sorte qu'elles ne nécessitent pas de carénage aérodynamique, et ne procurent donc que très peu de perturbations aérodynamiques sur le flux secondaire traversant le canal 38.

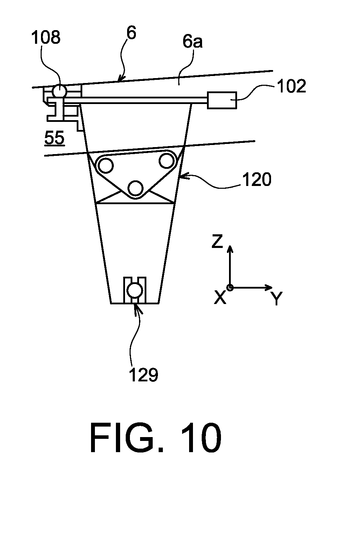

En référence à présent aux figures 9 et 10, il est représenté un assemblage 100 pour aéronef, selon un autre mode de réalisation préféré de la présente invention. Cet assemblage reprend un nombre important de caractéristiques de l'assemblage 100 décrit en référence aux figures précédentes. A cet égard, sur les figures, les éléments portant les mêmes références numériques correspondent à des éléments identiques ou similaires.

Dans ce mode de réalisation, seule la conception de la structure primaire de reprise d'efforts 46 diffère par rapport à celle montrée sur les figures précédentes. En effet, celle-ci se présente sous la forme d'un caisson sensiblement longitudinal, dont l'extrémité avant est fixée à une extrémité supérieure du carter de soufflante 12 par une attache moteur 150, et dont l'extrémité arrière est élargie dans la direction Z de manière à porter les moyens d'attache 54. Ces moyens sont composés des mêmes éléments 102, 108, 120, 129 décrits ci-dessus, et ne seront donc pas davantage décrits.

Sur la figure 10, on peut voir que les deux attaches 102, 108 sont effectivement logées dans le bord d'attaque 55 délimité par le longeron avant 6a de l'aile, et que les attache 120 et 129 sont masquées par le caisson 46, tous quatre attaches étant ici aussi agencés selon une disposition en T.

Bien entendu, diverses modifications peuvent être apportées par l'homme du métier à l'invention qui vient d'être décrite, uniquement à titre d'exemples non limitatifs.

## Revendications

1. Assemblage (100) pour aéronef comprenant un élément de voilure (6), une turbomachine (2) et un mât d'accrochage (4) de la turbomachine sur l'élément de voilure, le mât d'accrochage comprenant une structure primaire (46) de passage d'efforts ainsi que des moyens d'attache (54) de ladite structure primaire sur l'élément de voilure, ces moyens (54) formant un système isostatique,
**caractérisé en ce que** lesdits moyens d'attache (54) sont composés des éléments suivants :
- une première attache ou un premier groupe d'attaches (102) logé dans un bord d'attaque (55) de l'élément de voilure, et conçu pour assurer uniquement la reprise des efforts s'exerçant selon une direction transversale (Y) de la turbomachine et selon une direction longitudinale (X) de celle-ci ;
- une seconde attache (108) logée dans le bord d'attaque (55) de l'élément de voilure, décalée selon la direction transversale (Y) de la première attache ou du premier groupe d'attaches (102), et conçu pour assurer uniquement la reprise des efforts s'exerçant selon la direction longitudinale (X) de la turbomachine ;
- une troisième attache ou un troisième groupe d'attaches (120) décalé selon une direction verticale (Z) de la première attache ou du premier groupe d'attaches (102) et de la seconde attache (108), et conçu pour assurer uniquement la reprise des efforts s'exerçant selon la direction transversale (Y) de la turbomachine et selon la direction verticale (Z) de celle-ci ; et
- une quatrième attache (129) comprenant une bielle (130) s'étendant vers l'arrière, dont une première extrémité est raccordée sur la structure primaire (46) et dont une seconde extrémité est raccordée sur l'élément de voilure (6), ladite première extrémité de bielle étant décalée selon la direction verticale (Z) de la première attache ou du premier groupe d'attaches (102).

2. Assemblage selon la revendication 1, **caractérisé en ce que** ladite troisième attache ou le troisième groupe d'attaches (120) est agencé en dessous de la première attache ou du premier groupe d'attaches (102), et **en ce que** la première extrémité de la bielle (130) raccordée sur la structure primaire (46) est agencée en dessous de la troisième attache ou du troisième groupe d'attaches (120).

3. Assemblage selon la revendication 1 ou la revendication 2, **caractérisé en ce que** lesdits moyens d'attache (54) sont agencés en T en vue selon la direction longitudinale (X), la première attache ou le premier groupe d'attaches (102) et la seconde attache (108) étant respectivement raccordées aux extrémités de la tête du T logée dans le bord d'attaque (55) de l'élément de voilure, et la troisième attache ou le troisième groupe d'attaches (120) et la bielle (130) étant raccordées sur la base du T.

4. Assemblage selon l'une quelconque des revendications précédentes, **caractérisé en ce qu'**en vue de devant selon la direction longitudinale (X), la troisième attache ou le troisième groupe d'attaches (120) et la quatrième attache (129) sont masqués par la structure primaire (46) du mât d'accrochage.

5. Assemblage selon l'une quelconque des revendications précédentes, **caractérisé en ce que** la première attache ou le premier groupe d'attaches (102) est constitué par une attache unique.

6. Assemblage selon l'une quelconque des revendications précédentes, **caractérisé en ce que** la troisième attache ou le troisième groupe d'attaches (120) est constitué par une attache unique.

7. Assemblage selon l'une quelconque des revendications précédentes, **caractérisé en ce que** la première attache ou le premier groupe d'attaches (102) et la seconde attache (108) sont rapportés sur une extrémité supérieure d'un longeron avant (6a) de l'élément de voilure (6), cheminant selon une direction d'envergure de celui-ci.

8. Assemblage selon l'une quelconque des revendications précédentes, **caractérisé en ce que** la turbomachine (2) est à double flux et comprend un carter de soufflante (12) ainsi qu'un carter intermédiaire (14) agencé en aval du carter de soufflante et comportant un moyeu (20) portant des bras structuraux (22),
**en ce que** ladite turbomachine comprend une première enveloppe structurale (40) s'étendant vers l'aval à partir dudit moyeu (20) du carter intermédiaire, cette enveloppe (40) participant à la délimitation radiale interne d'un passage (38) pour un flux secondaire (36) de la turbomachine,
et **en ce que** ladite structure primaire (46) du mât d'accrochage comprend une seconde enveloppe structurale (50), montée sur ladite première enveloppe structurale (40) et agencée dans la continuité aval de celle-ci afin de participer également à la délimitation radiale interne du passage (38) pour le flux secondaire, ladite structure primaire (46) du mât d'accrochage comprenant en outre une structure de déport (52) agencée dans le passage pour le flux secondaire, reliant ladite seconde enveloppe structurale (50) audit élément de voilure et portant au moins une partie desdits moyens d'attache (54).

9. Aéronef comprenant au moins un assemblage (100) selon l'une quelconque des revendications précédentes.

## Patentansprüche

1. Baugruppe (100) für ein Luftfahrzeug mit einem Tragflächenelement (6), einem Turbotriebwerk (2) und einem Aufhängungssystem (4) für das Turbotriebwerk an dem Tragflächenelement, wobei das Aufhängungssystem eine Primärstruktur (46) zur Passage von Kräften sowie Befestigungsmittel (54) für die Primärstruktur an dem Tragflächenelement aufweist, wobei diese Mittel (54) ein isostatisches System bilden,
**dadurch gekennzeichnet, dass** die Befestigungsmittel (54) aus den folgenden Elementen bestehen:
- einer ersten Befestigung oder einer ersten Gruppe von Befestigungen (102), die in einer Vorderkante (55) des Tragflächenelements sitzen und die nur die Aufnahme von Kräften, die in einer Querrichtung (Y) des Turbotriebwerks und in einer Längsrichtung (X) desselben auftreten, gewährleisten sollen;
- einer zweiten Befestigung (108), die in der Vorderkante (55) des Tragflächenelements sitzt, die in der Querrichtung (Y) gegenüber der ersten Befestigung oder ersten Gruppe von Befestigungen 102) verschoben ist und die nur die Aufnahme von Kräften, die in der Längsrichtung (X) des Turbotriebwerks auftreten, gewährleisten soll;
- einer dritteln Befestigung oder Gruppe von Befestigungen (120), die in einer Vertikalenrichtung (2) gegenüber der ersten Befestigung oder ersten Gruppe von Befestigungen (102) und gegenüber der zweiten Befestigung (108) verschoben sind und die nur die Aufnahme von Kräften, die in der Querrichtung (Y) des und der Vertikalenrichtung (Z) desselben auftreten, gewährleisten sollen; und
- einer vierten Befestigung (129), die eine sich nach hinten erstreckende Stange (130) aufweist, von der ein erstes Ende an der Primärstruktur (46) befestigt ist und von der ein zweites Ende an dem Tragflächenelement (6) befestigt ist, wobei das erste Stangenende in der Vertikalenrichtung (Z) gegenüber der ersten Befestigung oder ersten Gruppe von Befestigungen (102) verschoben ist.

2. Baugruppe nach Anspruch 1, **dadurch gekennzeichnet, dass** die dritte Befestigung oder die dritte Gruppe von Befestigungen (120) unterhalb der ersten Befestigung oder der ersten Gruppe von Befestigungen (102) angeordnet ist und dass das an der Primärstruktur (46) befestigte erste Ende der Stange (130) unterhalb der dritteln Befestigung oder der dritten Gruppe von Befestigungen (120) angeordnet ist.

3. Baugruppe nach Anspruch 1 oder Anspruch 2, **dadurch gekennzeichnet, dass** die Befestigungsmittel (54) in Längsrichtung (X) gesehen T-förmig angeordnet sind, wobei sie erste Befestigung oder die erste Gruppe von Befestigungen (102) und die zweite Befestigung (108) jeweils an den Enden des Knopfes des T, der sich in der Vorderkante (55) des Tragflächenelements befindet, befestigt sind und die dritte Befestigung oder die dritte Gruppe von Befestigungen (120) und die Stange (130) an der Basis des T befestigt sind.

4. Baugruppe nach einem der vorhergehenden Ansprüche, **dadurch gekennzeichnet, dass**, in Längsrichtung (X) von vorne gesehen, die dritte Befestigung oder die dritte Gruppe von Befestigungen (120) und die vierte Befestigung (129) durch die Primärstruktur (46) des Aufhängungssystems verdeckt sind.

5. Baugruppe nach einem der vorhergehenden Ansprüche, **dadurch gekennzeichnet, dass** die erste Befestigung oder die erste Gruppe von Befestigungen (102) aus einer einzigen Befestigung besteht.

6. Baugruppe nach einem der vorhergehenden Ansprüche, **dadurch gekennzeichnet, dass** die dritte Befestigung oder die dritte Gruppe von Befestigungen (120) aus einer einzigen Befestigung besteht.

7. Baugruppe nach einem der vorhergehenden Ansprüche, **dadurch gekennzeichnet, dass** die erste Befestigung oder die erste Gruppe von Befestigungen (102) und die zweite Befestigung (108) an einem oberen Ende eines vorderen Trägers (6a) des Tragflächenelements (6) angesetzt sind, wobei sie in Richtung der Spannweite desselben laufen.

8. Baugruppe nach einem der vorhergehenden Ansprüche, **dadurch gekennzeichnet,**
**dass** das Turbotriebwerk (2) ein Doppelstrom-Turbotriebwerk ist und ein Fan-Gehäuse (12) sowie ein Zwischengehäuse (14), das stromabwärts des Fan-Gehäuses angeordnet ist und eine Strukturspeichen (22) tragende Nabe (20) aufweist, umfasst,
**dass** das Turbotriebwerk eine erste Strukturhülle (40), die sich von der Nabe (20) des Zwischengehäuses aus stromabwärts erstreckt, aufweist, wobei diese Hülle (40) an der inneren radialen Begrenzung eines Durchgangs (38) für einen Sekundärstrom (36) des Turbotriebwerks teilnimmt, und
**dass** die Primärstruktur (46) des Aufhängungssystems eine zweite Strukturhülle (50) aufweist, die an der ersten Strukturhülle (40) angebracht ist und fortlaufend stromabwärts von dieser angeordnet ist, sodass sie ebenfalls an der inneren radialen Begrenzung des Durchgangs (38) für den Sekundärstrom teilnimmt, wobei die Primärstruktur (46) des Aufhängungssystems ferner eine Verschiebungsstruktur (52), die in dem Durchgang für den Sekundärstrom angeordnet ist, aufweiset, wobei diese die zweite Strukturhülle (50) mit dem Tragflächenelement verbindet und mindestens einen Teil der Befestigungsmittel (54) trägt.

9. Luftfahrzeug, das mindestens eine Baugruppe (100) nach einem der vorhergehenden Ansprüche aufweist.

## Claims

1. An assembly (100) for an aircraft comprising a wing element (6), a turbomachine (2) and an attachment strut (4) for attaching the turbomachine on the wing element, the attachment strut comprising a primary structure (46) for the passage of forces as well as a means (54) for attaching said primary structure on the wing element, forming an isostatic system,
**characterized in that** said attachment means (54) is made up of the following elements:
- a first attachment or a first group of attachments (102) housed in a leading edge (55) of the wing element, and designed to ensure only the reaction of the forces exerted in a transverse direction (Y) of the turbomachine and in a longitudinal direction (X) thereof;
- a second attachment (108) housed in the leading edge (55) of the wing element, offset in the transverse direction (Y) of the first attachment or the first group of attachments (102), and designed to ensure the reaction only of the forces exerted in the longitudinal direction (X) of the turbomachine,
- a third attachment or a third group of attachments (120) offset in a vertical direction (Z) of the first attachment or the first group of attachments (102) and the second attachment (108), and designed to react only the forces exerted in the transverse direction (Y) of the turbomachine and in the vertical direction (Z) thereof; and
- a fourth attachment (129) comprising a connecting rod (130) extending backward, a first end of which is connected on the primary structure (46) and a second end of which is connected on the wing element (6), said first connecting rod end being offset in the vertical direction (Z) of the first attachment or the first group of attachments (102).

2. The assembly according to claim 1, **characterized in that** said third attachment or the third group of attachments (120) is arranged below the first attachment or the first group of attachments (102), and the first end of the connecting rod (130) connected on the primary structure (46) is arranged below the third attachment or the third group of attachments (120).

3. The assembly according to claim 1 or claim 2, **characterized in that** said attachment means (54) are arranged in a T shape as seen in the longitudinal direction (X), the first attachment or the first group of attachments (102) and the second attachment (108) being respectively connected to the ends of the head of the T housed in the leading edge (55) of the wing element, and the third attachment or the third group of attachments (120) and the connecting rod (130) being connected on the base of the T.

4. The assembly according to any one of the preceding claims, **characterized in that** seen from the front in the longitudinal direction (X), the third attachment or the third group of attachments (120) and the fourth attachment (129) are concealed by the primary structure (46) of the attachment strut.

5. The assembly according to any one of the preceding claims, **characterized in that** the first attachment or the first group of attachments (102) is made up of a single attachment.

6. The assembly according to any one of the preceding claims, **characterized in that** the third attachment or the third group of attachments (120) is made up of a single attachment.

7. The assembly according to any one of the preceding claims, **characterized in that** the first attachment or the first group of attachments (102) and the second attachment (108) are fastened on an upper end of a front beam (6a) of the wing element (6), traveling along a wingspan direction thereof.

8. The assembly according to any one of the preceding claims, **characterized in that** the turbomachine (2) is a dual-flow turbomachine and comprises a fan case (12) as well as an intermediate case (14) arranged downstream of the fan case and including a hub (20) bearing structural arms (22),
**in that** said turbomachine comprises a first structural enclosure (40) extending downstream from said hub (20) of the intermediate case, this enclosure (40) participating in inwardly radially delimiting a passage (38) for a secondary flow (36) of the turbomachine,
and **in that** and said primary structure (46) of the attachment strut comprises a second structural enclosure (50), mounted on said first structural enclosure (40) and arranged in the downstream continuation thereof so as also to participate in the inner radial delimitation of the passage (38) for the secondary flow, said primary structure (46) of the attachment strut also comprising an offset structure (52) arranged in the passage for the secondary flow, connecting said second structural enclosure (50) to said wing element and supporting at least a part of said attachment means (54).

9. An aircraft comprising at least one assembly (100) according to any one of the preceding claims.
